# EUROPÄISCHE PATENTSCHRIFT

(11) **EP 2 295 178 B1**
(45) Veröffentlichungstag und Bekanntmachung des Hinweises auf die Patenterteilung: **18.01.2012**
(21) Anmeldenummer: 09400045.2
(22) Anmeldetag: 12.09.2009
(51) Int. Cl.: B23D 47/02, B23Q 1/74

(54) **Holzbearbeitungsmaschine mit einem Tischverbreiterungsmodul**
Wood working machine with table extension module
Machine de traitement du bois avec module d'élargissement de table approprié

(43) Veröffentlichungstag der Anmeldung: 16.03.2011
(73) Patentinhaber: Scheppach Fabrikation von Holzbearbeitungsmaschinen GmbH, 89335 Ichenhausen (DE)
(72) Erfinder: Scherl, Thomas, 89073 Ulm (DE)
(74) Vertreter: Munk, Ludwig

(56) Entgegenhaltungen:
- EP-A2- 0 830 912
- EP-A2- 1 285 723
- DE-U1- 20 107 761
- DE-U1- 29 801 127
- GB-A- 2 317 851
- US-A1- 2005 172 772
- US-B1- 6 293 176
- US-B1- 6 986 370

## Beschreibung

Die Erfindung betrifft eine Holzbearbeitungsmaschine gemäß dem Oberbegriff des Anspruchs 1. Eine solche Holzbearbeitungsmaschine ist der DE 29 801 127 U1 zu entnehmen.

Bei Werkzeugmaschinen, insbesondere bei den Holzbearbeitungsmaschinen wie z.B. Kreissägen oder dergleichen müssen oft überbreite Werkstücke, wie z.B. breite Spanplatten an einem einen Maschinentisch durchgreifenden Werkzeug, wie z.B. einem Sägeblatt vorbeigeführt werden. Ist das Werkstück so breit, dass sein Schwerpunkt neben dem Maschinentisch liegt, besteht die Gefahr, dass das Werkstück während der Bearbeitung nach außen kippt. Um dies zu verhindern, muss ein Benutzer das Werkstück mit Kraft auf die Oberfläche des Maschinentisches drücken, wobei erhebliche Verletzungsgefahr besteht, weil der Benutzer bzw. der Bediener beim Kippen des Werkstücks bzw. einer dagegen gerichteten Druckbewegung leicht seine Finger in das Werkzeug bringen kann.

Daher werden bei Werkzeugmaschinen und insbesondere bei Holzbearbeitungsmaschinen der gattungsgemäßen Art oft Tischverbreiterungen an den Maschinentisch angebaut, welche eine neben dem Maschinentisch positionierbare Auszugplatte aufweisen, wobei die Auszugplatte über eine Anzahl an der Auszugplatte befestigter, in einer zugeordneten Anzahl tischseitig befestigbarer Führungsschienen geführte aufgenommene Auszugarme von dem Maschinentisch mit variablem Abstand positionierbar ist. An der Auszugplatte der Tischverbreiterung ist dabei häufig ein Parallelanschlag für das Werkstück befestigt, wobei ein Abstand des Parallelanschlags zu dem Werkzeug anhand einer Längenskala eingestellt werden kann, so dass ein überbreites Werkstück auf ein gewünschtes Maß geschnitten werden kann. Auf der gegenüberliegenden Seite der Tischverbreiterung sind bei gängigen Holzbearbeitungsmaschinen oft Quer- bzw. Gehrungsanschläge vorgesehen, an welche ein Werkstück unter einem gewünschten Winkel zu einer Längsrichtung bzw. einer Schnittrichtung des Werkzeugs angelegt werden kann und in dieser Position während der Bearbeitung geführt werden kann, so dass dort ein geführter Winkelschnitt vorgenommen werden kann.

So zeigt das Dokument US 2005/0172772 A1 eine Kreissäge mit einem Maschinentisch, an dem über zwei Auszugsarme eine schwenkbar am Parallelanschlag befestigte Tischverbreiterung angesetzt ist. Der Parallelanschlag kann dabei auf beiden Seiten des Maschinentisches auf die Auszugarme aufgesetzt werden. Die Auszugarme weisen dazu Passbohrungen auf, so dass das Parallelanschlagmodul abgenommen und an jeder gewünschten Passbohrung angesetzt und dann mit entsprechenden Klammern an den Auszugsarmen verspannt werden kann. Das bringt jedoch das Problem mit sich, dass das Parallelanschlagsmodul zuerst immer eingestellt werden muss.

Die britische Patentanmeldung GB 2 317 851 A (D2) zeigt ferner eine Kreissäge, bei der die Auszugarme, an denen ein Parallelanschlag befestigt ist, an beiden Seiten des Maschinentischs angesetzt werden können.

Häufig ist es von Vorteil, wenn der Parallelanschlag unabhängig von der Tischverbreiterung bewegt und eingestellt werden kann. Die US-Schriften US 6,986,370 B1 und US 6,293,176 B1 zeigen Holzbearbeitungsmaschinen mit einem über vorder- und rückseitige Führungsarme am Maschinentisch ausziehbar befestigten Tischverbreiterungsmodul, wobei ein Parallelanschlag in Nuten in den Führungsarmen eingesetzt werden kann.

Schließlich zeigt das deutsche Gebrauchsmuster DE 29801127 U1 schon eine Holzbearbeitungsmaschine mit einem Werktisch, an dem auf beiden Seiten identische Tischverbreiterungsmodule vorgesehen sind. Ein Parallelanschlagsmodul ist dabei entweder am Maschinentisch oder an der Auszugsplatte der Tischverbreiterung auf der dem Bediener zugewandten Seite aufsetz- und befestigbar.

Hiervon ausgehend ist es Aufgabe der vorliegenden Erfindung, bei einer Holzbearbeitungsmaschine der gattungsgemäßen Art einen großen Einsatzbereich der Holzbearbeitungsmaschine bei einfacher Handhabung zu ermöglichen.

Diese Aufgabe wird mit den Merkmalen des Anspruchs 1 gelöst.

Durch die Teilegleichheit der Auszugarme bzw. der Führungsschienen, d.h. weil jeder Auszugarm in jede Führungsschiene passt, gelingt ein schneller und einfacher Umbau der Tischverbreiterung von der einen auf die andere Seite der Werkzeugmaschine, ohne dass die Werkzeugmaschine bzw. das Tischverbreiterungsmodul völlig zerlegt und die Führungsschienen von dem Maschinentisch bzw. der Werkzeugmaschine getrennt werden müssten. Unabhängig von der Auszugsposition des Auszugselements auf der einen oder anderen Tischseite ist das Parallelanschlagsmodul dabei verschieblich auf den beiden identischen Auszugsarmen aufgenommen. Beim Umbau des Auszugselements des Tischverbreiterungsmoduls auf die andere Maschinentischseite kann das Parallelanschlagsmodul insgesamt von dem Auszugelement abgezogen werden. Nach dem Ansetzen des Auszugselements auf der anderen Maschinentischseite kann dann das Parallelanschlagsmodul wieder aufgesetzt werden. Die bedienerseitigen Betätigungselemente des Parallelanschlagsmoduls weisen somit auch bei auf der gegenüberliegenden Maschinentischseite gesetzten Auszugelement zum Bediener hin.

Dazu weisen die Auszugarme bevorzugt jeweils eine hinterschnittene Parallelanschlagsverschiebenut auf, in denen das Parallelanschlagsmodul aufgenommen ist.

Mit dem Umbau der Tischverbreiterung auf die entgegen der üblichen Auszugsrichtung liegende Seite des Maschinentisches kann beispielsweise ein dort vorhandenes Gehrungsanschlagsmodul auch für überbreite Werkstücke eingesetzt werden, ohne dass es zu den vorstehend beschriebenen Verletzungsgefahren kommt. Außerdem kann so eine Werkzeugmaschine je nach Einsatzort und den dort vorhandenen Platzbedingungen frei konfiguriert werden, was insbesondere bei auf Baustellen eingesetzten Maschinen und besonders dann von Vorteil ist, wenn das Umbauen schnell und einfach von statten geht.

Die Führungsnuten können ferner vorteilhaft zumindest abschnittsweise eine Auskleidung aufweisen, und /oder die Gleitabschnitte zumindest abschnittsweise eine Ummantelung, wobei die Auskleidung und/oder die Ummantelung zumindest an ihrer Gleitfläche aus einem gegenüber dem Material der Profilbauteile gut gleitfähigen Material besteht. Dadurch wird die Lagerung besonders leichtgängig, so dass die Auszugarme einfach aus den Führungsschienen herausgezogen und wieder in diese eingeschoben werden können.

Bei gattungsgemäßen Holzbearbeitungsmaschinen ist ferner eine tischseitig befestigbare Arretiereinrichtung vorgesehen, über welche die Auszugarme in den zugeordneten Führungsschienen mit einem gewünschten Abstand der Auszugplatte von dem Maschinentisch arretierbar und freigebbar sind. Bei der Holzbearbeitungsmaschine gemäß der vorliegenden Erfindung ist es dabei besonders vorteilhaft, wenn die Arretiereinrichtung zur Arretierung der Auszugarme sowohl bei auf der in Auszugsrichtung liegenden Seite des Maschinentisches positionierter Auszugplatte, als auch bei auf der in entgegen der Auszugsrichtung liegender Seite des Maschinentisches positionierter Auszugplatte geeignet ist, ohne umgebaut werden zu müssen.

Dies gilt insbesondere dann, wenn bei auf der in entgegen der Auszugsrichtung liegenden Seite des Maschinentisches positionierter und von dem Maschinentisch beabstandeter Auszugplatte ebenfalls eine Arretierung über die Arretiereinrichtung möglich ist, ohne dass die Arretiereinrichtung umgebaut werden muss, d.h. ohne dass die Befestigung der tischseitig befestigbaren Arretiereinrichtung gelöst und die Arretiereinrichtung an einer anderer Stelle des Maschinentischs wieder montiert werden müsste. Eine Umkonfiguration der Werkzeugmaschine wird dadurch weiter spürbar erleichtert.

Die Arretiereinrichtung kann dazu vorteilhaft eine Anzahl tischseitig befestigbarer, in dieser Stellung quer zur Auszugsrichtung zwischen einer Arretierstellung und einer Freigabestellung bewegbare Feststellklötze aufweisen, wobei zumindest einer der Anzahl Auszugarme zumindest eine sich parallel zur Auszugsrichtung erstreckende Anlagefläche aufweist, gegen welche die Anzahl Feststellklötze in der Arretierstellung gepresst wird, wobei der Auszugarm so geführt ist, dass der Auszugarm gegen den angepressten Feststellklotz gegengehalten wird.

Dabei ist die jeweilige Anlagefläche in die Auszugsrichtung vorzugsweise gegenüber dem jeweiligen Feststellklotz hinterschneidungsfrei am Auszugarm vorgesehen, so dass der Auszugarm aus der Führungsschiene entnommen werden kann, wenn sich der Feststellklotz in Freigabestellung befindet. Hierbei muss der Benutzer jedoch selbst sicherstellen, dass das Auszugelement nicht über den Feststelllklotz hinaus ausgezogen wird.

Es wäre aber auch denkbar, an der Anschlagfläche eine Hinterschneidung für den Feststellklotz vorzusehen, um einen Anschlag gegen ein überweites Herausziehen des Auszugarms bereitzustellen. Besonders geeignet im Sinne eines einfachen Umbaus des Auszugselements von der einen auf die andere Tischseite wäre dabei eine Hinterschneidung an einem einfach demontierbaren Bauteil, wie z.B. an einer auf das in der Führungsschiene aufgenommene Ende des Auszugarms aufgesetzten Gleitkappe. Weiterhin könnte die Arretiereinrichtung auch so aufgebaut sein, dass der bzw. die Feststellklötze in eine Entnahmestellung gebracht werden können und einen Zum Überwinden der Hinterschneidung nötigen Hub zwischen der Freigabestellung und der Entnahmestellung aufweisen.

Besonders vorteilhaft ist ferner eine Weiterbildung der Erfindung, bei der am in der jeweiligen Führungsschiene aufgenommenen Ende des Auszugarms ein Riegelelement vorgesehen ist, welches in einer verriegelte Stellung und eine entriegelte Stellung bringbar ist. In der verriegelten Stellung kann das Riegelelement einen über die Anlagefläche vorstehenden Anschlag für den zugeordneten Feststellklotz oder ein auf der Außenseite der zugeordneten Führungsschiene befestigtes Gegenanschlagselement bilden, um ein überweites Herausziehen zu verhindern, wobei der in die entriegelte Stellung gebrachte Anschlag die Anlagefläche nicht hinterschneidet, bzw. nicht an dem an der Führungsschiene vorgesehenen Gegenanschlag anschlägt, so dass die Auszugarme aus den Führungsschienen gezogen werden können.

Vorteilhaft kann das Riegelelement an der auf den Auszugarm aufgesetzten Gleitkappe ausgebildet sein. Das Riegelelement kann beispielsweise einen Schieberiegel oder einen Klappriegel aufweisen, welcher an einer auf den jeweiligen Auszugarm aufgeschraubten Gleitkappe vorgesehen ist. Soll das Auszugelement entnommen werden, kann der Klappriegel aus seiner einen Anschlag für den Feststellklotz bildenden Einsatzstellung in eine Entnahmestellung umgeklappt werden. Vorzugsweise ist dabei eine Sicherungseinrichtung, wie z.B. ein Splint vorhanden, welche den Klappriegel in der Einsatzstellung hält.

Vorteilhaft ist ferner an zumindest einem der Auszugarme an dessen tischabgewandten Ende eine Endkappe befestigt ist, welche einen größeren Durchmesser als der Auszugarm oder einen über den Durchmesser des Auszugarms überstehenden Vorsprung aufweist. Die Endkappe kann dann als eine Sicherung gegen ein unerwünschtes Abziehen des Parallelanschlagmoduls von den Auszugsarmen dienen.

Weiterhin kann dann an dem Parallelanschlagsmodul vorteilhaft ein Skalenzeiger bzw. ein Sichtfenster vorgesehen sein und und an der vorderen Führungsschiene eine dem Skalenzeiger bzw. dem Sichtfenster zugeordnete Skala. Bei im Bereich des Maschinentischs an die Auszugarme angesetztem Parallelanschlagsmodul kann dann mittels des Skalenzeigers bzw. dem Sichtfenster an der Skala der Abstand des Parallelanschlags von dem Werkzeug abgelesen werden. Zum Ablesen des Abstands des Parallelanschlags von dem Werkzeug bei an die Auszugplatte angesetztem Parallelanschlagsmodul kann darüber hinaus zumindest an dem vorderen Auszugarm oder der daran befestigten Gleitkappe ein Skalenzeiger angebracht sein, und an der vorderen Führungsschiene eine dem auszugarmseitigen Skalenzeiger zugeordnete Skala.

Wenn dabei an beiden Enden der vorderen Führungsschiene eine dem parallelanschlagsseitigen Skalenzeiger bzw. dem Sichtfenster zugeordnete Skala vorgesehen ist, kann, je nach dem ob das Parallelanschlagsmodul auf der in Auszugsrichtung liegenden Seite oder auf der entgegen der Auszugsrichtung liegenden Seite auf den Maschinentisch gesetzt ist, mittels des Skalenzeigers bzw. Sichtfensters auf der einen oder der anderen zugeordneten Skala der Abstand des Parallelanschlags von dem Werkzeug abgelesen werden. Wenn dabei ferner an den beiden Gleitkappen jeweils ein Skalenzeiger angebracht ist, und an beiden Enden der vorderen Führungsschiene eine Skala für einen der auszugarmseitigen Skalenzeiger vorgesehen ist, kann, je nach dem ob sich das Tischverbreiterungsmodul und das Parallelanschlagsmodul auf der in Auszugsrichtung liegenden Seite oder auf der entgegen der Auszugsrichtung liegenden Seite des Maschinentischs befindet, mittels des einen oder des anderen Skalenzeigers der Abstand des Parallelanschlags von dem Werkzeug abgelesen werden, wobei das Auszugelement zum Umbau nicht zerlegt werden muss.

Die Merkmale der weiteren Unteransprüche betreffen bevorzugte Ausführungsformen der Erfindung

Es zeigen:
- Figur 1: eine perspektivische Ansicht eines Maschinentisches einer Kreissäge mit einem angesetzten Tischverbreiterungsmodul gemäß einer ersten Ausführungsform der Erfindung;
- Figur 2: eine Draufsicht auf die in Figur 1 dargestellte Kreissäge mit teilweise ausgebrochener Ansicht des Maschinentisches;
- Figur 3: eine Vorderseitenansicht der in den Figuren 1 und 2 dargestellten Ausführungsform der Erfindung;
- Figur 4: eine stirnseitige Ansicht mit einer teilweise ausgebrochenen Darstellung einer bedienerseitigen Führungsschiene und einem darin aufgenommenen Führungsarm des in den vorhergehenden Figuren dargestellten Tischverbreiterungsmoduls;
- Figur 5: Einzelheit V in Figur 3;
- Figur 6: Einzelheit VI in Figur 3;
- Figur 7: Einzelheit VII in Figur 4;
- Figur 8: Einzelheit VIII in Figur 2; und
- Figur 9: Einzelheit IX in Figur 2;
- Fig. 10: eine der Figur 5 entsprechende Darstellung einer auf einen Auszugarm aufgenommenen Gleitkappe bei einer weiteren Ausführungsform der Erfindung in einer verriegelten Stellung;
- Fig. 11: eine perspektivische Darstellung der auf den Auszugarm aufgenommenen Gleitkappe bei der in Fig. 10 dargestellten Ausführungsform der Erfindung in einer Entnahmestellung;
- Fig. 12: eine perspektivische Darstellung einer Gleitbuchse, welche bei den in den vorstehenden Figuren gezeigten Ausführungsformen der Erfindung zum Einsatz kommt;
- Fig. 13: eine der Figur 11 entsprechende Darstellung einer auf einen Auszugarm aufgenommenen Gleitkappe bei einer weiteren Ausführungsform der Erfindung in einer verriegelten Stellung;
- Fig. 14: eine Detailansicht einer am Außenumfang einer Führungsschiene vorgesehenen, der in Fig. 13 gezeigten Gleitkappe zugeordneten Anschlagsschraube;
- Figur 15: eine teilweise ausgebrochene Draufsicht auf einen Maschinentisch einer Kreissäge mit einem angesetzten Tischverbreiterungsmodul gemäß einer Weiterbildung der in den vorherigen Figuren gezeigten Ausführungsformen der Erfindung;
- Fig. 16: eine Detailansicht der in Figur 13 gezeigten, auf einen Auszugarm aufgenommenen Gleitkappe mit einem zusätzlichen Skalenzeiger gemäß der in Fig. 15 gezeigten Weiterbildung.

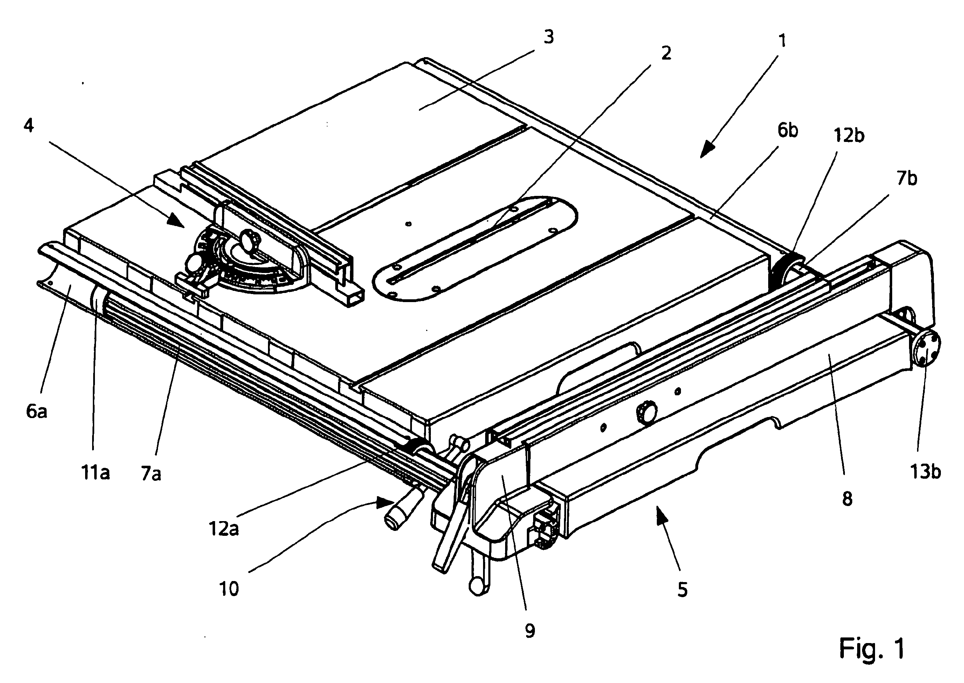

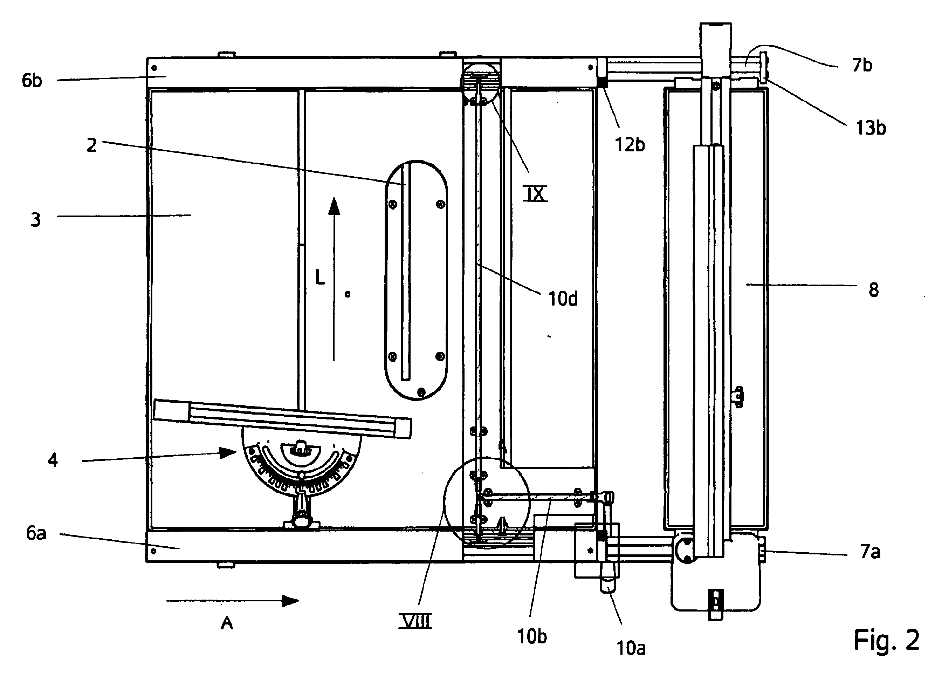

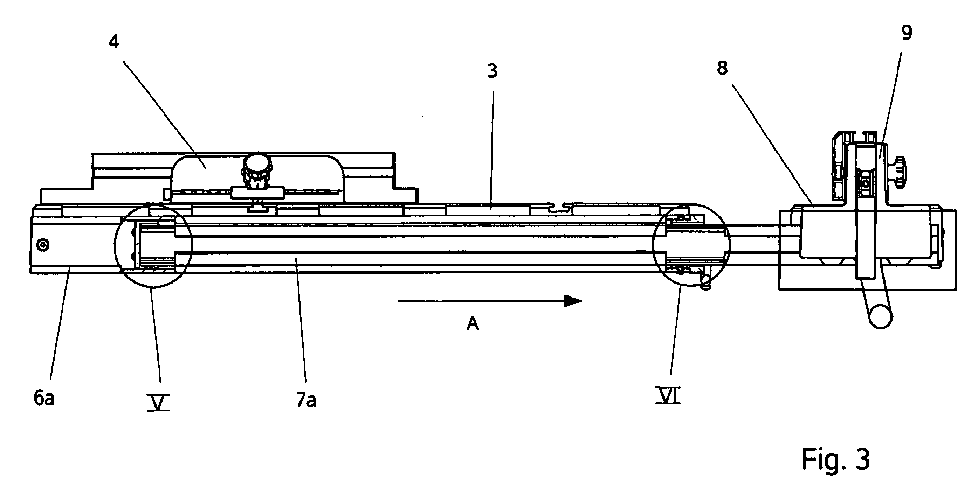

Zunächst wird Bezug genommen auf die Figuren 1 bis 3, welche einen Maschinentisch 3 einer mit 1 bezeichneten Kreissäge zeigen, an dem seitlich ein Tischverbreiterungsmodul angebaut ist. Das Tischverbreiterungsmodul befindet sich dabei auf der in Auszugsrichtung A (Fig. 2) liegenden Seite des Maschinentischs 3. An dem Maschinentisch 3 ist ein Werkzeugschlitz 2 vorgesehen, durch den ein Kreissägeblatt der Kreissäge greifen kann, wobei auf der einen Seite des Werkzeugschlitzes 2 eine Auszugplatte 8 eines Auszugelements 5 des Tischverbreiterungsmoduls angebaut ist und auf der anderen Seite des Werkzeugschlitzes 2 ein Gehrungsanschlagsmodul 4. Das Tischverbreiterungsmodul ist dabei so aufgebaut, dass die Maschine einfach umkonfiguriert werden kann, indem das Auszugelement 5 auf der anderen Tischseite angesetzt wird.

Dazu ist längs des Maschinentisches 2 vorne und hinten jeweils eine Führungsschiene 6a, 6b befestigt, in welchen zwei Auszugarme 7a, 7b geführt aufgenommen sind, zwischen denen die Auszugplatte 8 mit der Oberseite des Maschinentisches 3 bündig oberseitig befestigt ist. Das Auszugelement 5 umfasst somit neben der Auszugplatte 8 auch die beiden Auszugarme 7a, 7b und muss nicht zerlegt werden, bevor es an der anderen Tischseite wieder in die Führungsschienen 6a, 6b eingesetzt wird.

Die Führungsschienen 6a, 6b sind dabei jeweils von einer Führungsnut über ihre gesamte, in Auszugsrichtung A verlaufende Länge durchdrungen, welche von der Führungsschiene 6a, 6b selbst bzw. deren Innenquerschnitt und einer auf Seiten der Auszugplatte 8 jeweils aufgesteckten Gleitbuchse 12a, 12b gebildet wird. Die Führungsarme 7a, 7b sind dabei in der jeweiligen Führungsnut geführt aufgenommen und weisen über ihre gesamte Länge einen konstanten, nicht hinterschnittenen Querschnitt auf, welcher sich nur durch eine auf ihr in der jeweiligen Führungsnut aufgenommenes Ende aufgesteckte und dort leicht abschraubbare Gleitkappe 11a - bzw. auf der gegenüberliegenden Seite hier nicht dargestellt - 11 b ändert.

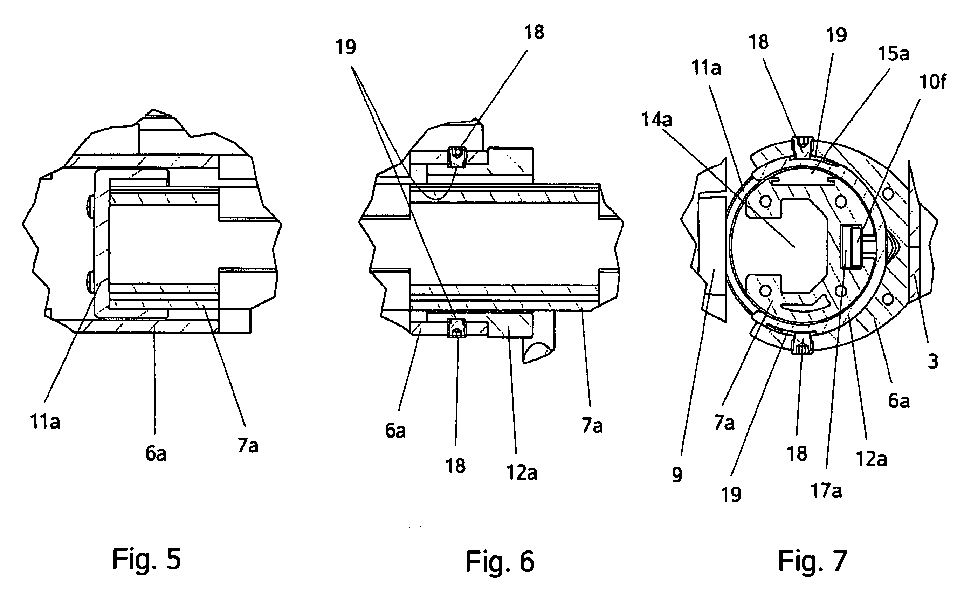

Die Führungsschienen 6a, 6b und die Auszugarme 7a, 7b können als stranggepresste Aluminiumgussprofile ausgebildet sein, wobei auch andere Metallgusse denkbar wären (z.B. zur Gewichtsersparnis Magnesiumguss) Das Metallprofil der Auszugarme 7a, 7b gleitet jeweils auf den Gleitbuchsen 12a, 12b ab und die Gleitkappen 11a, 11b in dem Metallprofil der Führungsschienen 6a, 6b. Die jeweils mit einer der Gleitkappen 11a, 11b versehenen Enden der Führungsarme 7a sind dabei der Figur 5 im Einzelnen zu entnehmen. Man erkennt, dass die Gleitkappen 11a, 11b auf die Enden des jeweiligen Auszugsarms 7a, 7b aufgeschraubt sind und auf der Innenoberfläche der jeweiligen Führungsschiene 6a, 6b in der jeweiligen Führungsnut abgleiten.

Die Gleitkappen und die Gleitbuchsen können dabei einen Anschlag und einen Gegenanschlag bilden, welche ein unbeabsichtigtes Herausziehen der Führungsarme aus den Führungsschienen verhindern, aber gleichzeitig ein schnelles und einfaches Umkonfigurieren des Tischverbreiterungsmoduls auf die andere Maschinentischseite erlauben, weil dies allein durch ein Lösen und Wiederbefestigen der Gleitkappen und/oder der Gleitbuchsen gelingt.

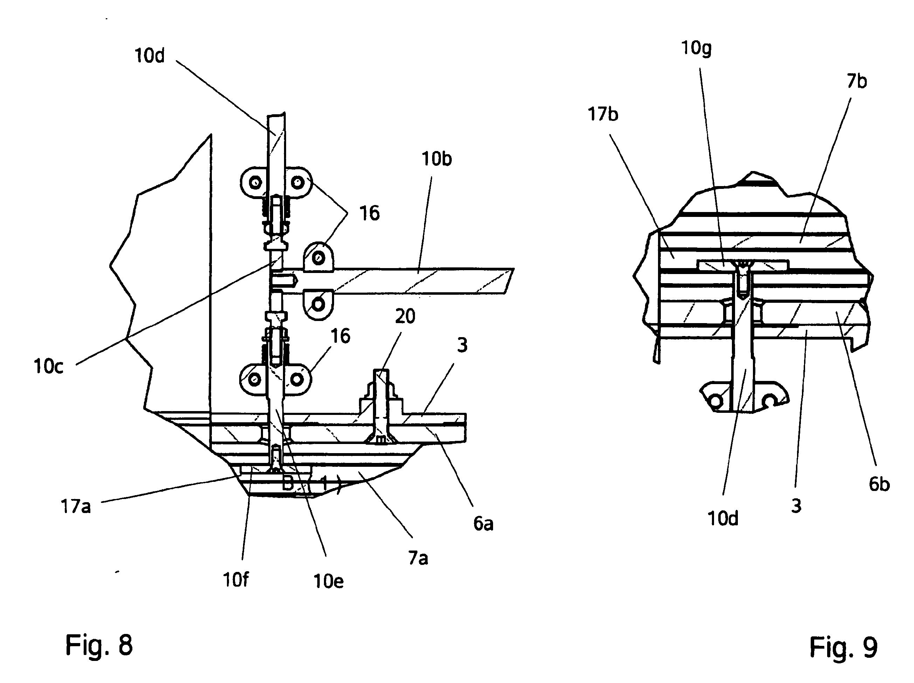

Bei den gezeigten Ausführungsformen der Erfindung ist jedoch vorteilhaft eine weiter unten stehend näher erläuterte Arretiereinrichtung 10 vorgesehen, welche in längs der Auszugarme 7a, 7b verlaufenden Nuten 17a, 17b aufgenommene Feststellklötze 10f, 10g aufweist (Fig. 8, 9), über welche das Auszugelement 5 in einer gewünschten Lage fixiert werden kann. Dadurch ist sichergestellt, dass die Auszugarme 7a, 7b in jeder Einsatzposition auch arretiert werden können, weil sich über die Arretiereinrichtung 10 die Feststellklötze 10f, 10g in der Feststellnut 17a, 17b gegen eine Anlagefläche pressen lassen.

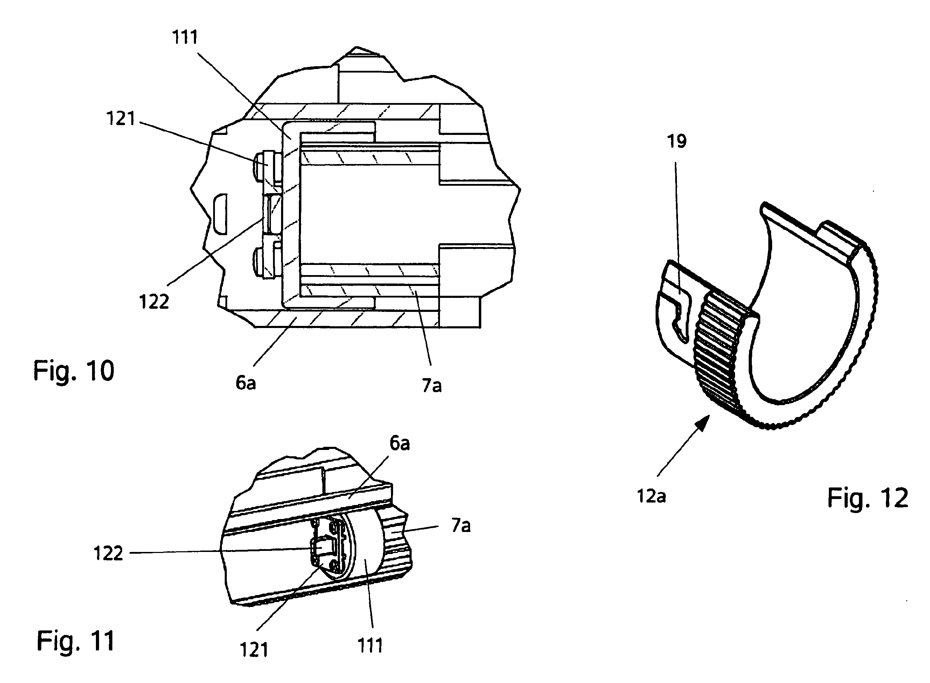

Anschlag und Gegenanschlag gegen überweites Herausziehen der Auszugarme 7a, 7b werden daher bei der in den Figuren 1 bis 12 gezeigten Ausführungsform der Erfindung durch die Feststellklötze 10f, 10g und die jeweils zugeordnete Gleitkappe 11 a, 11b (Fig. 5) bzw. 111 (Fig. 10, 11) am in der zugeordneten Führungsschiene 6a, 6b aufgenommenen Ende des jeweiligen Auszugarms 7a, 7b gebildet.

Zum Umkonfigurieren der Maschine mit einem auf der anderen Tischseite gelegenen Auszugelement 5 müssen bei Ausführungsformen mit den in Fig. 5 im Einzelnen dargestellten Gleitkappen 11 a bzw. 11b zumindest die Gleitkappen 11a, 11b von den Auszugarmen 7a, 7b abgenommen werden und nach dem Wiedereinsetzen der Auszugarme 7a, 7b in die Führungsschienen 6a, 6b von der anderen Tischseite her wieder daran befestigt werden. Dies ist aufgrund einer nicht näher bezeichneten Verschraubung mit den Auszugsarmen 7a, 7b auf einfache Weise möglich. Dabei wäre es jedoch ebenfalls denkbar, die Gleitkappen mit den Feststellnuten 17a, 17b entsprechenden Durchbrüchen zu versehen, wobei dann über andere Maßnahmen oder manuell vom Bediener sichergestellt werden müsste, dass die Auszugarme 7a, 7b nicht über den arretierbaren Bereich hinaus aus den Führungsschienen 6a, 6b ausgezogen werden.

Eine andere vorteilhalfte Ausführungsform, welche abgeänderte Gleitkappen 111 aufweist, die zum Umbau nicht abgeschraubt werden müssen, aber ansonsten gegenüber der in den Figuren 1 bis 9 dargestellten Ausführungsform unverändert ist, ist den Figuren 10, 11 zu entnehmen. Hier muss zur Entnahme der Auszugarme 7a, 7b aus den Führungsschienen 6a, 6b an den Gleitkappen 111 jeweils ein an einer Riegelträgerplatte 121 vorgesehener klapperiegel 122 herausgezogen werden, welcher den Anschlag für den zugeordneten Feststellklotz 10f, 10g bildet. Die Gleitkappen 111 können dabei selbstverständlich an dem vorderen und dem hinteren Auszugarm 7a, 7b vorgesehen sein. Theoretisch wäre es jedoch ausreichend, nur an einem der Auszugarme eine Gleitkappe 111 mit dem Riegelelement bzw. der Riegelträgerplatte 121 vorzusehen und an dem anderen Auszugarm eine Gleitkappe mit einer nicht hinterschnittenen Feststellklotz-Führungsnut. Die Gleitkappen 111 bilden somit mit den zugeordneten Auszugarmen 7a, 7b jeweils einen Gleitabschnitt.

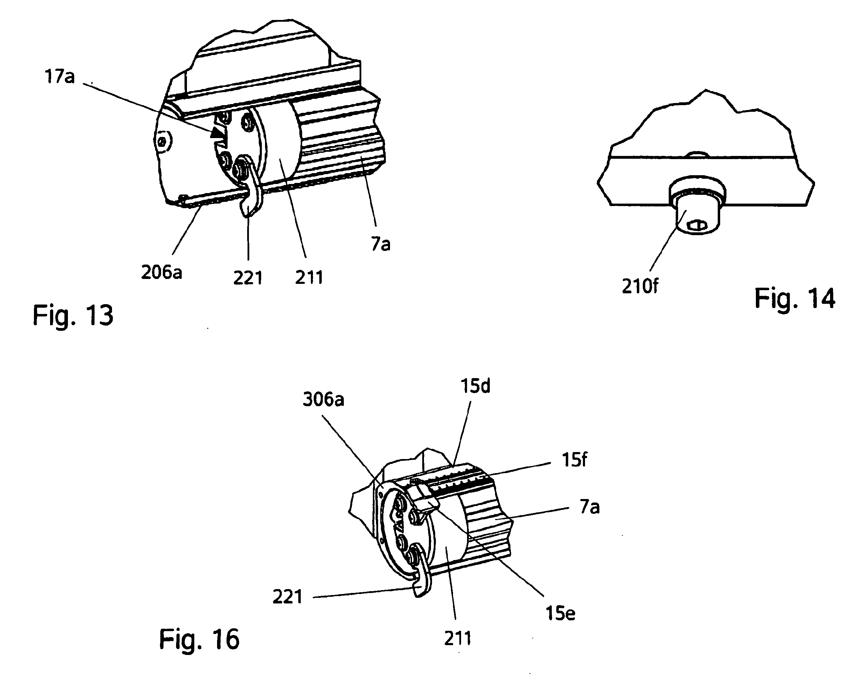

Eine weitere vorteilhalte Ausführungsform, welche weiter modifizierte Gleitkappen 211 mit einem angeschraubten, durch eine vorderseitige Längsöffnung auf die Außenseite der zugeordneten Führungsschiene 206a herausragenden Außenriegel 221 aufweist, ist ferner der Figur 13 zu entnehmen. Auch diese Ausführungsform hat somit gegenüber der in den Figuren 1 bis 9 dargestellten Ausführungsform geänderte Gleitkappen 211, sowie eine in der Figur 14 im Detail gezeigte, am Außenumfang der Führungsschiene 206a eingeschraubte Anschlagschraube 210f, welche bei dieser Ausführungsform anstatt des Feststellklotzes der Arretiervorrichtung einen Gegenanschlag für den Außenriegel 221 bildet. Zur Entnahme der Auszugarme 7a, 7b aus den Führungsschienen 206a muss lediglich der Außenriegel 221 nach oben geklappt werden, da, wie in der Figur 13 zu erkennen ist, die Gleitkappe 211 eine der Feststellnut 17a entsprechende Ausnehmung aufweist, so dass die Feststellnut 17a nicht hinterschnitten ist. Dabei kann selbstverständlich an dem vorderen und dem hinteren Auszugarm 7a eine der Gleitkappen 211 vorgesehen sein. Dann wäre es ausreichend, beispielsweise lediglich an der vorderen Führungsschiene 206a einen Anschlagschraube 210f für den Außenriegel 221 vorzusehen, und auf der Rückseite der Maschine 1 eine gegenüber den vorhergehenden Ausführungsformen unmodifizierte Führungsschiene 6b. Die Gleitkappen 211 bilden somit mit den zugeordneten Auszugarmen 7a, 7b jeweils einen Gleitabschnitt.

Die mit den Gleitbuchsen 12a bzw. 12b versehenen, der Auszugplatte 8 zugewandten Enden der Führungsschienen 6a bzw. 6b sind dabei bei den gezeigten Ausführungsformen geleich aufgebaut und im Einzelnen der Figur 6 zu entnehmen. Figur 12 zeigt zudem eine Einzelansicht der Gleitbuchse 12a, welche baugleich zu der Gleitbuchse 12b ist. Im übrigen sind auch die Führungsschienen, Auszugarme und Gleitkappen auf beiden Seiten des Maschinentischs in allen beschriebenen Ausführungsformen bevorzugt baugleich. Man erkennt, dass die Gleitbuchsen 12a, 12b von der Seite her in bzw. auf die Führungsschiene 6a, bzw. 6b aufgesteckt sind. Die jeweilige Führungsschiene 6a, 6b weist Gewindebohrungen auf, in welche Sicherungsschrauben 18 eingeschraubt sind und in eine entsprechende Einschraubführungsnut 19 an der Gleitbuchse 12a, 12b eingreifen, so dass die Gleitbuchsen 12a, 12b über die Sicherungsschrauben 18 an der Führungsschiene 6a, 6b fixiert sind. Der Innenquerschnitt der Führungsschienen 6a, 6b und der Außenquerschnitt der Auszugarme 7a, 7b ist dabei rund, was sich im Hinblick auf ein schnelles Umbauen des Auszugselements 5 und eine exakte Längsführung des Auszugelements 5 als vorteilhaft erwiesen hat.

Soll nun das Auszugelement 5 auf der anderen Seite des Maschinentisches 3 angebracht werden, also auf Seiten des Gehrungsanschlagsmoduls 4, so werden lediglich die Gleitbuchsen 12a, 12b jeweils gedreht und mit ihren Einschraubführungsnuten 19 an den Sicherungsschrauben 18 ausgerastet. Die Auszugarme 7a, 7b mitsamt der daran befestigten Auszugplatte 8 lassen sich dann aus den Führungsschienen 7a, 7b herausziehen. Anschließend kann das gesamte Auszugelement 5 auf der anderen Seite des Maschinentisches 3 wiederum mit seinen Auszugarmen 7a, 7b in die beiden zugeordneten Führungsschienen 6a, 6b eingeschoben werden. Dabei ist auch auf der anderen Seite eine Einrichtung zur lösbaren Befestigung der Gleitbuchsen 12a, 12b vorgesehen, nämlich entgegen der zeichnerischen Darstellung, in der nur zwei Gewindebohrungen dargestellt sind, ebenfalls Sicherungsschrauben 18, so dass die beiden Gleitbuchsen 12a, 12b dort einfach wieder aufgesetzt und durch verdrehen eingerastet werden können.

Es wäre aber auch eine Ausführungsform der Gleitbuchsen ohne Einschraubführungsnuten denkbar, bei der dann aber zur Entnahme der Auszugarme aus den Führungsschienen die Sicherungsschrauben gelöst werden müssten.

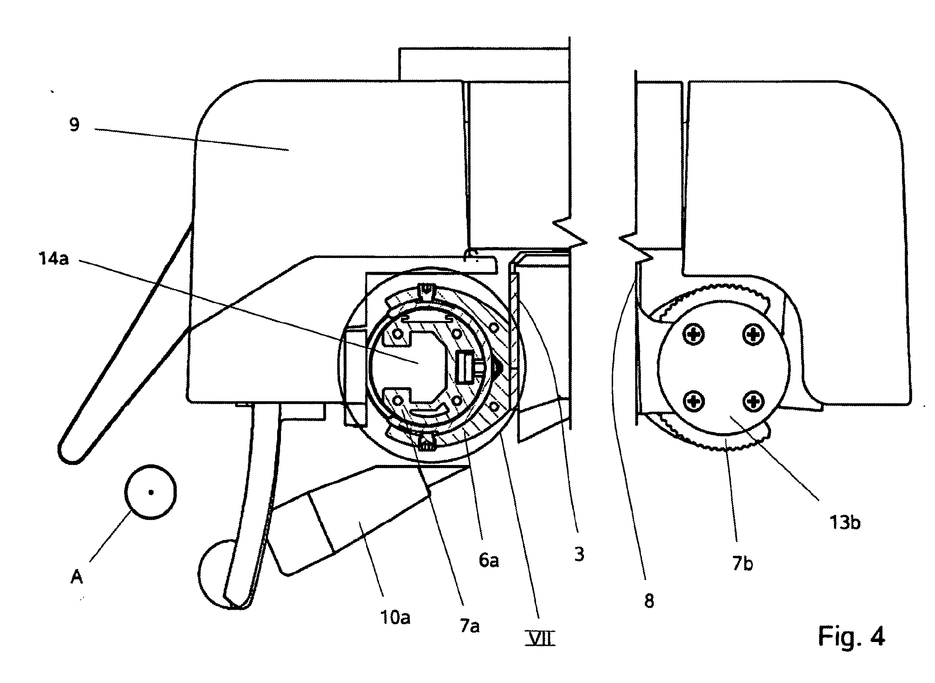

Die Gleitbuchsen 12a, 12b und die Gleitkappen 11a, 11b bzw. 111 bzw. 211 können dabei aus verschiedenen Materialien sein. Falls sie jedoch aus einem auf den Metallprofilen der Führungsschienen bzw. der Auszugarme gut gleitfähigen Kunststoff bestehen, z.B. aus einem Polyamid, kann auf eine zusätzliche Schmierung in den beiden Führungsschienen 6a, 6b verzichtet werden. Dabei ist es gleichgültig, auf welcher Seite des Maschinentisches 3, also auf der in Auszugsrichtung A (Figur 2) gelegenen Seite des Maschinentisches 3 oder auf der entgegengesetzten Seite des Maschinentisches 3 das Auszugelement 5 angesetzt ist. In beiden Fällen entsteht über die Gleitkappe 11a, 11b bzw. 111 bzw. 211 und die Gleitbuchsen 12a, 12b eine sichere Lagerung des Auszugselements 5 an dem Maschinentisch 3, wobei zur Fixierung des Auszugselements in bzw. gegen die Auszugsrichtung A in beiden Fällen die Arretiereinrichtung 10 vorgesehen ist, welche im Folgenden unter Bezugnahme auf die Figuren 2 und 4 näher erläutert wird.

Die Arretiereinrichtung 10 weist dabei einen Drehgriff 10a auf, welcher über eine Spindel 10b und, wie insbesondere in Figur 8 zu erkennen ist, über diese Spindel 10b umgreifende Schellen 16 an der Unterseite des Maschinentisches 3 verschraubt ist. Über eine Drehbewegung des Drehgriffes 10a kann somit eine auf ein dem Drehgriff 11a gegenüberliegendes Ende der Spindel 10b aufgeschraubte Exzenterscheibe 10c verdreht werden.

Die Exzenterscheibe 10c hat dabei eine spiralsegmentförmige Außenoberfläche, auf der einerseits ein Ende einer kurzen, zur dem Bediener zugewandten Maschinentisch-Vorderseite hin führende Spannwelle 10e und andererseits ein Ende eine lange, zur Maschinentisch-Rückseite hin führende Spannwelle 10d anliegt. Alternativ könnte die Exzenterscheibe auch entsprechende Führungsnuten aufweisen, in denen die Spannwellenenden geführt aufgenommen sind.

Die Spannwellen 10d, 10e sind dabei wiederum über Schellen 16 an der Maschinentisch-Unterseite verschraubt. Wie den Figuren 8 und 9 zu entnehmen ist, ist auf die voneinander wegweisenden Enden der beiden Spannwellen 10d, 10e jeweils ein Feststellklotz 10f, 10g aufgeschraubt, welcher sich in einer zugeordneten Feststellnut 17a, bzw. 17b in dem jeweiligen Auszugarm 7a, 7b befindet. Die Feststellnuten 17a, 17b durchdringen dabei die Auszugarme 7a, 7b in Auszugrichtung A vollständig, so dass sich die Auszugarme 7a, 7b bei in Freigabestellung befindlichen Feststellklötzen 10f, 10g aus der Führungsschiene 6, 6b ziehen lassen.

In Figur 4, bzw. Figur 7 ist dabei der Feststellklotz 10f in der Feststellnut 17a in einer an einer Anlagefläche der Feststellnut 17a anliegenden Stellung, also der Arretierstellung, gezeigt. Die Feststellnut 17a und die Feststellnut 17b weisen dabei einander zugewandte, hinterschnittene Öffnungen auf, welche sich parallel zur Auszugsrichtung A erstrecken und von den Spannwellen 10d, 10e durchdrungen werden. Die Anlageflächen in den Feststellnuten 17a, 17b befinden sich dagegen auf der Innen- bzw. Rückseite der Hinterschneidungen.

Wie man wiederum am Besten aus Figur 8 erkennt, werden die beiden Spannwellen 10d, 10e jeweils über eine einenends an der Exzenterscheibe 10c befestigte und anderenends an der jeweiligen Spannwelle 10d, 10e befestigte Spannfeder in die Arretierstellung, also in die Stellung, in der die Feststellklötze 10f, 10g gegen die Innen-Anlagefläche in der jeweiligen Feststellnut 17a, 17b gepresst sind, vorgespannt. Das Auszugelement 5 befindet sich dadurch ohne Betätigung des Drehgriffs 10a durch den Bediener stets in einem in Seitenrichtung arretierten Zustand und kann nur durch einen Bedienereingriff in die Freigabestellung gebracht wird, um den Abstand der Auszugplatte 8 von dem Werkzeug 2 zu ändern oder das Auszugelement 5 des Tischverbreiterungsmoduls auf die andere Seite des Maschinentischs 3 umzubauen.

Wird das Auszugelement 5 aus der in den Figuren 1 bis 3 gezeigten Position (in Auszugsrichtung A neben dem Maschinentisch 3 positionierte Stellung) ausgebaut und auf der anderen Seite des Maschinentisches wieder in die Führungsschienen 6a, 6b eingesetzt, wie vorstehend beschrieben worden ist, so gelingt eine Arretierung über die Arretiervorrichtung 10, ohne dass diese umgebaut werden muss. Vielmehr kann die Arretiervorrichtung 10 an Ort und Stelle am Maschinentisch 3 verbleiben, da beide Auszugarme 7a, 7b in Abmessung und Aufbau identisch sind und aufgrund ihrer achssymmetrischen Anordnung nach dem Umbau ohne weiteres mit der Feststellnut 17b auf den Feststellklotz 10f bzw. mit der Feststellnut 17a auf den Feststellklotz 17g aufgeschoben werden können, ohne dass sich eine Änderung der Funktionsweise der Arretiereinrichtung 10 ergibt.

Dabei ist es besonders vorteilhaft, dass sich die Feststellklötze 10f, 10g samt ihrer Spannwellen 10d, 10e und der Exzenterscheibe 10c in einem mittigen Bereich des Maschinentisches 3 befinden. Selbstverständlich ist hier mit "mittiger Bereich" ein Bereich in der Nähe des für das Werkzeug vorgesehenen Werkzeugschlitzes 2 gemeint, da am Werkzeug selbst kein Platz für die Arretiervorrichtung bzw. deren Spannwellen 10d, 10e ist, da es dort mit dem Antrieb des Werkzeugs und dem Werkzeug selbst zu Kollisionen kommen würde.

Um den Abstand zwischen dem an der Seite des Maschinentisches 3 angeordneten Drehgriff 10a und den weiteren, in dem mittigen Bereich angeordneten Teilen des Antriebsstrangs 10b, 10c, 10d, 10e der Arretiereinrichtung 10 zu überbrücken, ist hier eine den Drehgriff 10a mit der Exzenterscheibe 10c verbindende Spindel 10b vorgesehen. Auf diese Weise ist sichergestellt, dass nicht nur in Auszugsrichtung A eine große Auszugslänge erreicht werden kann, welche letztlich dadurch begrenzt wird, dass die Auszugarme 7a, 7b noch durch die Feststellklötze 10b, 10g erfasst werden können. Falls die Auszugarme 7a, 7b dabei über die Feststellklötze 10f, 10g in den Feststelllnuten 17a, 17b gesichert sind, bedeutet dies, dass die Feststellklötze 10f, 10g noch an die Hinterschneidung der Feststelllnuten 17a, 17b an den Gleitkappen 11a, 11b bzw. an den an den Gleitkappen 111 vorgesehenen Klappriegel 122 anschlagen. Bei den Ausführungsformen, bei denen an den Gleitkappen 211 der aus der jeweiligen Führungsnut herausragenden Außenriegel 221 und als Anschlag dafür der Schraubenkopf der an der Führungsschiene befestigten Anschlagschraube vorgesehen ist, bedeutet dies, dass der Außenriegel 221 noch an den Schraubenkopf der Anschlagschraube 210f anschlägt.

Auch bei in entgegengesetzter Richtung an den Maschinentisch 3 angesetzten Auszugelement 5 kann noch eine relativ große Auszugslänge erreicht werden, wenngleich diese aufgrund des kürzeren Abstandes der Feststellklötze 10f, 10g von den Gleitkappen 11b, 11a (bei an dem Maschinentisch 3 anliegender Auszugplatte 8) und damit letztlich aufgrund der etwas außermittig zur Auszugsrichtung A hin versetzten Anordnung der Feststellklötze 10f, 10g begrenzt ist. Auf dieser Seite ist jedoch die Tischplatte bis zum Werkzeugschlitz 2, also bis zum Sägeblatt breiter, so dass auf beiden Seiten fast die gleiche maximale Auszugslänge bzw. Auflagefläche erreicht werden kann.

Unabhängig von der Auszugsposition des Auszugselements 5 ist das Parallelanschlagsmodul 9 auf den Auszugsarmen 7a, 7b verschieblich aufgenommen. Dazu weisen die Auszugarme 7a, 7b, wie am Besten aus den Figuren 4 und 7 hervorgeht, jeweils eine weitere, hinterschnittene Parallelanschlagsverschiebenut 14a auf, in denen das Parallelanschlagsmodul 9 auf nicht dargestellte Weise ähnlich wie die Feststellklötze 10f, 10g der Arretiereinrichtung 10 aufgenommen ist. Ferner weisen die beiden Auszugarme 7a, 7b jeweils eine weitere, oberseitige Aufnahmenut 15a auf, in welche ein Blech mit einer darauf angetragenen Längsskala aufnehmbar bzw. einklebbar ist, so dass der Bediener den Abstand des Parallelanschlags von dem Werkzeug am Werkzeugschlitz 2 ermessen kann. Ferner ist an dem hinteren Auszugarm 7b auf das auf Seiten des Parallelanschlags gelegene Ende eine Endkappe 13b aufgeschraubt, welche als Sicherungsanschlag für das Parallelanschlagsmodul 9 dient.

Beim Umbau des Auszugselements 5 des Tischverbreiterungsmoduls auf die andere Maschinentischseite kann diese Endkappe 13b abgenommen werden, so dass das Parallelanschlagsmodul 9 insgesamt von dem Auszugelement 8 abgezogen werden kann. Nach dem Ansetzen des Auszugselements 5 auf der anderen Maschinentischseite kann dann das Parallelanschlagsmodul 9 wieder aufgesetzt werden. Die bedienerseitigen Betätigungselemente des Parallelanschlagsmoduls 9 weisen somit auch bei auf der gegenüberliegenden Maschinentischseite 3 gesetzten Auszugelement 5 zum Bediener hin. Das Abnehmen der Endkappe 13b ist aber nicht zwingend, wenn der Parallelanschlag so gestaltet ist, dass er auch so komplett von der Tischverbreiterung entfernt werden und dann auf der anderen Seite wieder eingesetzt werden, ohne dass dazu die Endkappe 13b abgenommen werden muss.

Die Führungsschienen 6a, 6b sind dabei über Führungsschienen-Befestigungsschrauben 20 (Figur 8) an dem Rahmen des Maschinentisches bzw. an der Tischplatte 3 befestigt und können erfindungsgemäß in diesem befestigten Zustand am Maschinentisch 3 verbleiben, wenn das Auszugelement 5 auf der anderen Maschinentischseite an den Maschinentisch 3 angesetzt werden soll.

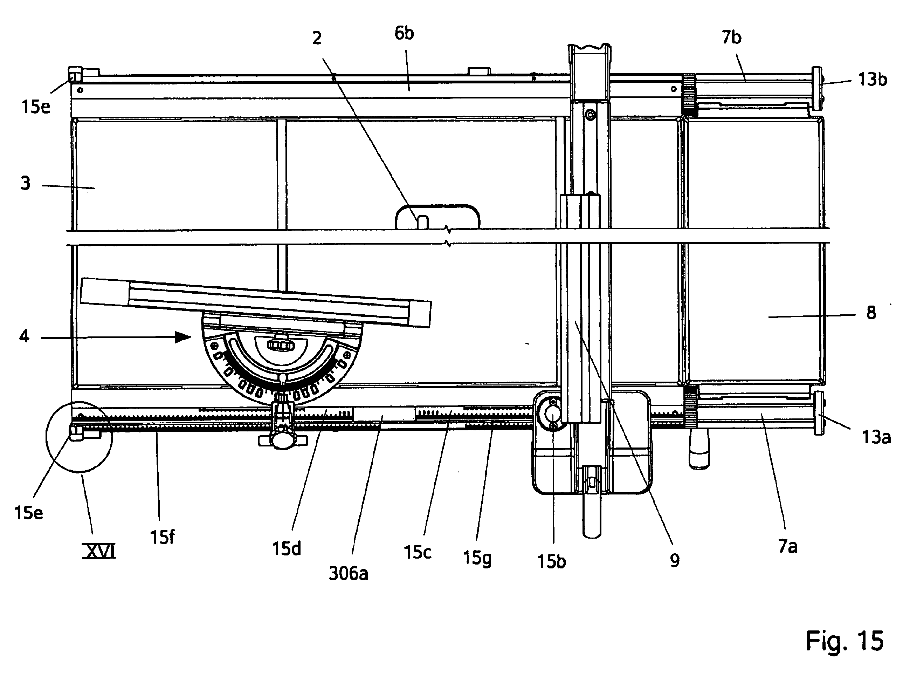

In den Figuren 15 und 16 ist eine weitere vorteilhalte Ausführungsform mit Ableseskalen 15c, 15d, 15f, 15g für die Auszugslänge des Parallelanschlags 9 dargestellt, wobei die schon in Fig. 13 gezeigte Gleitkappe 211 dadurch modifiziert worden ist, dass hier ergänzend zu dem Außenriegel 221 ein Skalenzeiger 15e daran angeschraubt ist, welcher ebenfalls durch die vorderseitige Längsöffnung einer zugeordneten, vorderen Führungsschiene 306a herausragt. Auf der entgegen der Auszugsrichtung A liegenden Seite kann dann an der Führungsschiene 306a die Skala 15f angebracht sein, auf der sich mit Hilfe des Skalenzeigers 15e die Auszugslänge des auf der in Auszugsrichtung A liegenden Seite an den Maschinentisch 3 angesetzten Parallelanschlags 9 ablesen lässt.

Wie aus der Figur 15 hervorgeht kann dabei selbstverständlich an dem vorderen und dem hinteren Auszugarm 7a, 7b eine Gleitkappe 211 mit einem daran angebrachten Skalenzeiger 15e vorgesehen sein. Wird das Tischverbeiterungsmodul an der anderen Tischseite angesetzt, so dass sich der Auszugarm 7b vorne am Maschinentisch 3 befindet, steht so wiederum ein Skalenzeiger 15e zur Verfügung, um auf einer am anderen Ende der vorderen Führungsschiene 306a angebrachten, zweiten Skala 15g die Auszugslänge des Tischverbeiterungsmoduls in die entgegengesetzte Richtung abzulesen.

Ferner können an beiden Enden der vorderen Führungsschiene 306a Zusatzskalen 15c, 15d vorgesehen sein, an denen, wenn das Parallelanschlagsmodul 9 an den Maschinentisch 3 angesetzt ist, jeweils der Abstand zum Werkzeug 2 durch ein zugeordnetes Sichtfenster 15b am Parallelanschlag 9 abgelesen werden kann. Will der Bediener den Parallelanschlag 9 dagegen an die Auszugplatte 8 der Tischverbreiterung ansetzen, muss dazu zunächst der Parallelanschlag 9 gegen die Endkappen 13a, 13b gefahren werden. Das Maß kann dann mit dem am in der Führungsschiene 306a befindlichen Ende des Auszugarms 7a bzw. an der Gleitkappe 211 angebrachten Skalenzeiger 15e auf einer weiteren, an der Führungsschiene 306a angebrachten Skala abgelesen werden. In beiden Fällen ist zu sehen, wie weit ein Werkstückanschlag des Parallelanschlags von dem Werkzeug bzw. dem Werkzeugschlitz 2 entfernt ist.

Abwandlungen und Modifikationen der dargestellten Ausführungsform sind selbstverständlich möglich, ohne den Rahmen der Erfindung zu verlassen.

So wäre es beispielsweise denkbar, die offenen Enden der Führungsschienen an der Einrichtung zum lösbaren Befestigen der Gleitbuchsen mit einer Abdeckkappe zu versehen. Ebenfalls denkbar wäre es, beide Enden der Führungsschienen mit Gleitbuchsen zu versehen und beim Umbau des Auszugselements von der einen Maschinentischseite auf die andere lediglich die Gleitkappen von den Führungsarmen bzw. abzunehmen, so dass diese aus den Führungsschienen herausgezogen und auf der gegenüberliegenden Seite wieder eingesetzt werden können.

Weiterhin wäre es denkbar, anstatt für jeden Auszugarm einen Feststellklotz vorzusehen und die beiden Feststellklötze in einen mittigen Bereich des Maschinentisches zu positionieren, um eine ausreichende Auszugslänge auch auf der entgegen der Auszugsrichtung liegenden Seite des Maschinentisches zu erreichen, sowohl in einem in Auszugsrichtung liegenden Seitenbereich des Maschinentisches als auch in einem entgegen der Auszugsrichtung liegenden Seitenbereich des Maschinentisches entweder für jeden Führungsarm Feststellklötze vorzusehen, oder für den einen Führungsarm einen Feststellklotz an dem einen Tischende und für den anderen Führungsarm einen Feststellklotz an dem anderen Tischende. Entsprechend wären in diesem Fall zwei in Auszugsrichtung voneinander beabstandete Exzenterscheiben nötig, welche auf einer gemeinsamen Spindel aufgenommen sein und über den Drehhebel betätigt werden könnten.

Der Skalenzeiger 15e könnte selbstverständlich bei allen vorstehend beschriebenen Gleitkappen vorgesehen sein, sowie alternativ oder ergänzend zu dem Außenriegel 221 bzw. dem Riegelelement 121.

Die Erfindung verkörpert sich somit in den Merkmalen des unabhängigen Anspruchs 1, welche gemäß vorteilhafter Weiterbildungen beliebig mit den zusätzlichen Merkmalen der Unteransprüche kombinierbar sind.

### Bezugszeichenliste

- A: Auszugsrichtung
- L: Längsrichtung
- 1: Kreissäge (Werkzeugmaschine)
- 2: Werkzeugschlitz
- 3: Maschinentisch
- 4: Gehrungsanschlagsmodul
- 5: Auszugelement
- 6a: vordere Führungsschiene
- 6b: hintere Führungsschiene
- 7a: vorderer Auszugarm
- 7b: hinterer Auszugarm
- 8: Auszugplatte
- 9: Parallelanschlagsmodul
- 10: Arretiereinrichtung
- 10b, 10c, 10d, 10e,: Antriebsstrang der Arretiereinrichtung
- 10a: Drehgriff
- 10b: Spindel
- 10c: Exzenterscheibe
- 10d: lange Spannwelle
- 10e: kurze Spannwelle
- 10f, 10g: Feststellklötze
- 11a, 11b: Gleitkappen (Ummantelung)
- 12a, 12b: Gleitbuchsen (Auskleidung)
- 13a: vordere Endkappe
- 13b: hintere Endkappe
- 14a: Parallelanschlagsverschiebenut
- 15a: Aufnahmenut für Breitenskala
- 16: Schellen
- 17a: vordere Feststellnut
- 17b: hintere Feststellnut
- 18: Sicherungsschraube
- 19: Einschraubführungsnuten
- 20: Führungsschienen-Befestigungsschraube

- 111: Gleitkappe
- 121: Riegelträgerplatte (Riegelelement)
- 122: Klappriegel

- 211: Gleitkappe
- 206a: vordere Führungsschienen mit Anschlagschraube
- 206b: hintere Führungsschienen mit Anschlagschraube
- 210f: Anschlagschraube
- 221: Außenriegel

- 306a: vordere Führungsschiene mit Skalen und Anschlagschraube
- 15b: Sichtfenster
- 15c: Sichtfenster-Skala für in Auszugsrichtung am Maschinentisch angesetzten Parallelanschlag
- 15d: Sichtfenster-Skala für entgegen der Auszugsrichtung am Maschinentisch angesetzten Parallelanschlag
- 15e: Skalenzeiger
- 15f: Skalenzeiger-Skala für in Auszugsrichtung an dem Auszugelement angesetzten Parallelanschlag
- 15g: Skalenzeiger-Skala für entgegen der Auszugsrichtung an dem Auszugelement angesetzten Parallelanschlag

## Patentansprüche

1. Holzbearbeitungsmaschine (1), insbesondere Kreissäge(1), mit einem Maschinentisch (3), an dem zwei Führungsschienen (6a, 6b; 206a, 6b; 306a, 6b) befestigt sind und der von einem Bearbeitungswerkzeug (2) durchsetzt ist, mit einem Auszugelement (5), welches zur Verbreiterung des Maschinentischs (3) eine insbesondere mit dem Maschinentisch (3) oberseitig fluchtende, in einer Auszugsrichtung (A) neben dem Maschinentisch (3) positionierbare Auszugplatte (8) aufweist, sowie zwei an der Auszugplatte (8) befestigte, in den Führungsschienen (6a, 6b; 206a, 6b; 306a, 6b) in der Auszugsrichtung (A) geführt aufgenommene Auszugarme (7a, 7b), so dass der Abstand der Auszugplatte (8) von dem Maschinentisch (3) veränderbar ist, und mit einem verschiebbar geführten Parallelanschlagsmodul (9),
**dadurch gekennzeichnet, dass**
jede Führungsschiene (6a, 6b; 206a, 6b; 306a, 6b) von einer Führungsnut durchdrungen ist, und an jedem Auszugarm (7a, 7b) ein Gleitabschnitt vorgesehen ist, welcher einen dem Innenquerschnitt der Führungsnut entsprechenden Außenquerschnitt aufweisen, so dass jeder Auszugarm (7a, 7b) mit seinem Gleitabschnitt in der zugeordneten Führungsnut gleitgeführt ist,
das Auszugelement (5) zum Umbau von der in Auszugsrichtung (A) liegenden Seite des Maschinentischs (3) auf die entgegengesetzte Seite des Maschinentischs (3) bei an der Auszugplatte (8) befestigten Auszugarmen (7a, 7b) ausgebildet ist, um den Maschinentisch (3) wahweise auf der einen oder anderen Seite zu verbreitern, und die beiden Führungsschienen (6a, 6b; 206a, 6b; 306a, 6b) zum Aufnehmen und Entnehmen der zugeordneten Auszugarme (7a, 7b) mit wahlweise auf der in Auszugsrichtung (A) liegenden Seite des Maschinentischs (3) positionierten Auszugplatte (8) oder auf der in entgegengesetzter Richtung liegenden Seite des Maschinentischs (3) positionierten Auszugplatte (8) im tischseitig befestigten Zustand ausgebildet sind, wobei
die Auszugarme (7a, 7b) achssymmetrisch angeordnet, gleich dimensioniert und als Profile mit konstantem Querschnitt ausgebildet sind, und das Parallelanschlagsmodul (9) auf bzw. in den Auszugarmen (7a, 7b) verschiebbar geführte ist.

2. Holzbearbeitungsmaschine (1) nach Anspruch 1, **dadurch gekennzeichnet, dass** die Auszugarme (7a, 7b) jeweils eine hinterschnittene Parallelanschlagsverschiebenut (14a) aufweisen und das Parallelanschlagsmodul (9) in den Parallelanschlagsverschiebenuten (14a) aufgenommen ist.

3. Holzbearbeitungsmaschine (1) nach Anspruch 1 oder 2, **dadurch gekennzeichnet, dass** der Innenquerschnitt der Führungsschienen (6a, 6b; 206a, 6b; 306a, 6b) auf ihrer im befestigten Zustand tischabgewandten Längsseite offen und hinterschnitten ist.

4. Holzbearbeitungsmaschine (1) nach Anspruch 1, 2 oder 3, **dadurch gekennzeichnet, dass** an zumindest einem der Auszugarme (7a, 7b) an dessen tischabgewandten Ende eine Endkappe (13a, 13b) befestigt ist, welche einen größeren Durchmesser als der Auszugarm (7a, 7b) aufweist, oder ein über den Durchmesser des Auszugarms überstehender Vorsprung vorgesehen ist.

5. Holzbearbeitungsmaschine (1) nach einem der vorhergehenden Ansprüche, **dadurch gekennzeichnet, dass** zwei an den in Auszugsrichtung (A) verlaufenden Seiten des Maschinentischs (3) oder der Werkzeugmaschine (1) parallel verlaufend und achssymmetrisch befestigbare, gleich dimensionierte Führungsschienen (6a, 6b; 206a, 6b; 306a, 6b) vorgesehen sind, welche einen über ihre Länge konstantem Innenquerschnitt aufweisen, welcher die jeweilige Führungsnut zumindest überwiegend bildet.

6. Holzbearbeitungsmaschine (1) nach einem der vorhergehenden Ansprüche, **dadurch gekennzeichnet, dass** die Führungsschienen (6a, 6b; 206a, 6b; 306a, 6b) und die Auszugarme (7a, 7b) jeweils aus einem vorzugsweise stranggepressten Profilbauteil, beispielsweise aus Metall ausgebildet sind, zumindest eine, vorzugsweise beide Führungsnuten zumindest abschnittsweise eine Auskleidung, beispielsweise aus Kunststoff aufweisen, und /oder zumindest einer, vorzugsweise beide Gleitabschnitte zumindest abschnittsweise eine Ummantelung, beispielsweise aus Kunststoff aufweisen, wobei die Auskleidung und/oder die Ummantelung zumindest an ihrer Gleitfläche aus einem gegenüber dem Material der Profilbauteile gut gleitfähigen Material besteht.

7. Holzbearbeitungsmaschine (1) nach Anspruch 6, **dadurch gekennzeichnet, dass** jede Kunststoffummantelung jeweils als eine auf das in der zugeordneten Führungsnut aufgenommene Ende des jeweiligen Auszugarms (7a, 7b) aufgesetzte Gleitkappe (11a, 11b; 111; 211) ausgebildet ist, auf der der Auszugarm (7a, 7b) in der Führungsnut, vorzugsweise in dem Metallprofil der Führungsschiene (6a, 6b; 206a, 6b; 306a, 6b) abgleitet.

8. Holzbearbeitungsmaschine (1) nach Anspruch 6 oder 7, **dadurch gekennzeichnet, dass** jede Auskleidung als zumindest eine auf zumindest eines der beiden Enden der zugeordneten Führungsschiene (6a, 6b; 206a, 6b; 306a, 6b) aufgesetzte Gleitbuchse (12a, 12b) ausgebildet ist, wobei der zugeordnete Auszugarm (7a, 7b) vorzugsweise mit seinem Metallprofil an der Gleitbuchse (12a, 12b) abgleitet, welche sich auf Seiten der Auszugplatte (8) befindet.

9. Holzbearbeitungsmaschine (1) nach Anspruch 8, **dadurch gekennzeichnet, dass** an beiden entgegengesetzten Führungsschienenenden eine Einrichtung zum lösbaren Befestigen jeweils einer Gleitbuchse (12a, 12b) vorgesehen ist, so dass die Gleitbuchse (12a, 12b) je nach dem, ob die Auszugplatte (8) auf der in Auszugsrichtung (A) liegender Seite des Maschinentischs (3) positioniert werden soll oder auf der in entgegengesetzten Richtung liegenden Seite des Maschinentischs (3), auf das in Auszugsrichtung (A) liegende Führungsschienenende oder auf das in entgegengesetzten Richtung liegende Führungsschienenende aufgesetzt werden kann.

10. Holzbearbeitungsmaschine (1) nach Anspruch 8, **dadurch gekennzeichnet, dass** an beiden entgegengesetzten Führungsschienenenden eine Gleitbuchse vorgesehen ist.

11. Holzbearbeitungsmaschine (1) nach einem der vorhergehenden Ansprüche, **dadurch gekennzeichnet, dass** der Innenquerschnitt der Führungsschienen (6a, 6b; 206a, 6b; 306a, 6b) und der Außenquerschnitt der Auszugarme (7a, 7b) im wesentlichen rund ist.

12. Holzbearbeitungsmaschine (1) nach einem der vorhergehenden Ansprüche, **dadurch gekennzeichnet, dass** eine tischseitig befestigbare Arretiereinrichtung (10) vorgesehen ist, über welche die Anzahl Auszugarme (7a, 7b) in der Anzahl Führungsschienen (6a, 6b; 206a, 6b; 306a, 6b) mit einem gewünschten Abstand der Auszugplatte (8) von dem Maschinentisch (3) arretierbar und freigebbar ist, wobei die Arretiereinrichtung (10) zur Arretierung der Auszugarme (7a, 7b) sowohl bei auf der in Auszugsrichtung (A) liegenden Seite des Maschinentischs (3) positionierter Auszugplatte (8) als auch bei auf der in entgegengesetzten Richtung liegender Seite des Maschinentischs (3) positionierter Auszugplatte (8) geeignet ist, insbesondere bei auf der in entgegengesetzten Richtung liegenden Seite des Maschinentischs (3) positionierten und von dem Maschinentisch (3) beabstandeter Auszugplatte (8), ohne umgebaut werden zu müssen.

13. Holzbearbeitungsmaschine (1) nach Anspruch 12, **dadurch gekennzeichnet, dass** die Arretiereinrichtung (10) eine Anzahl tischseitig befestigbare, in dieser Stellung quer zur Auszugsrichtung (A) zwischen einer Arretierstellung und einer Freigabestellung bewegbare Feststellklötze (10f, 10g) aufweist, wobei zumindest einer der Anzahl Auszugarme (7a, 7b) zumindest eine parallel zur Auszugsrichtung (A) verlaufende Anlagefläche aufweist, gegen welche die Anzahl Feststellklötze (10f, 10g) in der Arretierstellung gepresst wird, wobei der Auszugarm (7a, 7b) so geführt ist, dass der Auszugarm (7a, 7b) gegen den angepressten Feststellklotz (10f, 10g) gegengehalten wird.

14. Holzbearbeitungsmaschine (1) nach Anspruch 13, **dadurch gekennzeichnet, dass** beide Auszugarme (7a, 7b) jeweils eine Feststellnut (17a, 17b) aufweisen, wobei die Feststellnuten (17a, 17b) auf den einander zugewandten Seiten der Auszugsarme eine hinterschnittene Öffnung und auf der Rückseite der Hinterschneidung einander abgewandte Anlageflächen aufweisen, und für jeden der Auszugarme (7a, 7b) zumindest ein Feststellklotz (10f, 10g) vorgesehen ist, welcher über eine an dem Feststellklotz (10f, 10g) befestigte, die Hinterschneidung durchgreifende Spannwelle (10d, 10e) betätigbar ist.

## Claims

1. A wood working machine (1), in particular a circular saw (1), comprising
a machine table (3) on which two guide rails (6a, 6b; 206a, 6b; 306a, 6b) are fastened and which is penetrated by a working tool (2),
an extension element (5) which for widening of the machine table (3) presents an extension plate (8) in particular flush on top with the machine table (3) and which can be positioned adjacent to the machine table (3) in an extension direction (A), as well as two extension arms (7a, 7b) fixed to the extension plate (8) and received in a guided manner in the guide rails (6a, 6b; 206a, 6b; 306a, 6b) in the extension direction (A) so that the distance of the extension plate (8) to the machine table (3) is modifiable,
a shiftably guided rip fence module (9)
**characterized in that**
each guide rail (6a, 6b; 206a, 6b; 306a, 6b) being penetrated by a guide groove, and a sliding portion being provided on each extension arm (7a, 7b) which sliding portion comprises an external cross section corresponding to the internal cross section of the guide groove so that each extension arm (7a, 7b) with its sliding portion is guided slidingly in the allocated guide groove,
the extension element (5) is formed for retrofit from the machine table (3) side located in the extension direction (A) to the opposite machine table (3) side with extension arms (7a, 7b) fitted to the extension plate (8) in order to widen the machine table (3) optionally on the one or on the other side and that the two guide rails (6a, 6b; 206a, 6b; 306a, 6b) are formed for receiving and removing the allocated extension arms (7a, 7b) are formed in a condition of the said guide rails fastened to the table with the extension plate (8) positioned optionally on the machine table (3) side located in the extension direction (A) or with the extension plate (8) positioned on the machine table (3) side located in the opposite direction, wherein
the extension arms (7a, 7b) being located in an axially symmetrical manner, of equal dimension and formed as profiles or sections with constant cross section, and the rip fence module (9) is guided shiftably on or in the extension arms (7a, 7b).

2. A wood working machine (1) according to claim 1, **characterised in that** the extension arms (7a, 7b) each comprise an undercut rip fence shifting groove (14a) and that the rip fence module (9) is received in the rip fence shifting grooves (14a).

3. A wood working machine (1) according to claim 1 or 2, **characterised in that** the internal cross section of the guide rails (6a, 6b; 206a, 6b; 306a, 6b) on their longitudinal side facing away from the table in the fastened condition is open and undercut.

4. A wood working machine (1) according to claim 1, 2 or 3, **characterised in that** on at least one of the extension arms (7a, 7b) an end cap (13a, 13b) is fixed on its end facing away from the table which has a larger diameter than the extension arm (7a, 7b) or that a projection protruding from the diameter of the extension arm is provided.

5. A wood working machine (1) according to claim 1, 2 or 3, **characterised in that** two guide rails (6a, 6b; 206a, 6b; 306a, 6b) of equal dimension, running in parallel and fastenable in an axially symmetrical manner on the sides running in the extension direction (A) of the machine table (3) or of the machine (1) are provided which guide rails comprise an internal cross section constant over their length which forms the respective guide groove at least predominantly.

6. A wood working machine (1) according to claim 1 or 5, **characterised in that** the guide rails (6a, 6b; 206a, 6b; 306a, 6b) and the extension arms (7a, 7b) each are formed from a preferably extruded section component, for example from metal, at least one, preferably both guide grooves at least in sections comprise a lining, for example out of plastic material, and / or at least one, preferably both sliding portions at least in sections comprise a covering, for example out of a plastic material, with the lining and / or covering at least on its glide surface consisting of a material with good gliding qualities with respect to the material of the section components.

7. A wood working machine (1) according to claim 6, **characterised in that** each plastic covering is formed each as a sliding cap (11 a, 11 b; 111; 211) placed onto the end of the respective extension arm (7a, 7b) received in the allocated guide groove on which sliding cap the extension arm (7a, 7b) slides off in the guide groove, preferably in the metal profile or section of the guide rail (6a, 6b; 206a, 6b; 306a, 6b).

8. A wood working machine (1) according to claim 6 or 7, **characterised in that** each lining is formed as at least one slide bush 12a, 12b placed onto at least one of the two ends of the allocated guide rail (6a, 6b; 206a, 6b; 306a, 6b), with the allocated extension arm (7a, 7b) sliding off on the slide bush 12a, 12b preferably with its metal profile or section, which is located on the side of the extension plate (8).

9. A wood working machine (1) according to claim 8, **characterised in that** on both opposite ends of the guide rails a device is provided for releasable fixing of one slide bush (12a, 12b) each so that the slide bush (12a, 12b) - depending on whether the extension plate (8) is supposed to be positioned on the machine table (3) side located in the extension direction (A) or on the machine table (3) side located in the opposite direction - can be placed onto the guide rail end located in the extension direction (A) or on the guide rail end located in the opposite direction.

10. A wood working machine (1) according to claim 8, **characterised in that** a slide bush is provided on both opposite guide rail ends.

11. A wood working machine (1) according to claim 1 or 2 or 3, **characterised in that** the internal cross section of the guide rails (6a, 6b; 206a, 6b; 306a, 6b) and the external cross section of the extension arms (7a, 7b) is substantially circular.

12. A wood working machine (1) according to claim 1 or 2 or 3, **characterised in that** a locking device (10) fastenable on the table is provided by means of which the number of extension arms (7a, 7b) can be locked and released in the number of guide rails (6a, 6b; 206a, 6b; 306a, 6b) with a desired distance of the extension plate (8) to the machine table (3), with the locking device (10) being suitable for locking of the extension arms (7a, 7b) not only when the extension plate (8) is positioned on the machine table (3) side located in the extension direction (A) but also when the extension plate (8) is positioned on the machine table (3) located in the opposite direction, especially when the extension plate (8) is positioned on the machine table (3) side located in the opposite direction and spaced apart from the machine table (3), without having to be retrofitted.

13. A wood working machine (1) according to claim 12, **characterised in that** the locking device (10) comprises a number of locking blocks (10f, 10g) fastenable on the table and movable in this position transversely to the extension direction (A) between a locking position and a release position, with at least one of the number of extension arms (7a, 7b) comprising at least one bearing surface extending in parallel to the extension direction (A) against which the number of locking blocks (10f, 10g) is pressed in the locking position, with the extension arm (7a, 7b) being guided such that the extension arm (7a, 7b) is held up against the pressed-on locking block (10f, 10g).

14. A wood working machine (1) according to claim 13, **characterised in that** both extension arms (7a, 7b) each comprise a locking groove (17a, 17b), with the locking grooves (17a, 17b) on the sides of the extension arms facing each other comprising an undercut opening and bearing surfaces facing away from each other on the rear side of the undercut, and at least one locking block (10f, 10g) being provided for each of the extension arms (7a, 7b) which locking block is operable via a clamping shaft (10d, 10e) fastened to the locking block (10f, 10g) and passing through the undercut.

## Revendications

1. Machine à travailler le bois (1), en particulier scie circulaire (1), avec une table de machine (3) sur laquelle sont fixés deux rails de guidage (6a, 6b ; 206a, 6b ; 306a, 6b) et qui est traversée par un outil d'usinage (2), avec un élément extensible (5) qui, pour élargir la table de machine (3), comprend une plaque extensible (8) dont la surface supérieure, en particulier, est en alignement avec la table de machine (3) et qui peut être positionnée dans une direction de sortie (A) à côté de ladite table de machine (3), ainsi que deux bras extensibles (7a, 7b) qui sont fixés sur ladite plaque extensible (8) et sont reçus et guidés dans la direction de sortie (A) dans lesdits rails de guidage (6a, 6b ; 206a, 6b ; 306a, 6b) de sorte que la distance de ladite plaque extensible (8) par rapport à la table de machine (3) peut être modifiée, et avec un module de butée parallèle (9) guidé en translation,
**caractérisée par le fait que**
chacun des rails de guidage (6a, 6b ; 206a, 6b ; 306a, 6b) est traversée par une rainure de guidage et que sur chacun des bras extensibles (7a, 7b) est prévu un segment de glissement qui présente une section extérieure correspondant à la section intérieure de ladite rainure de guidage de sorte que chacun des bras extensibles (7a, 7b) est guidé à glissement par son segment de glissement dans la rainure de guidage associée,
ledit élément extensible (5) est réalisé pour être démonté du côté de la table de machine (3) situé dans ladite direction de sortie (A) et être remonté du côté opposé de la table de machine (3) pendant que les bras extensibles (7a, 7b) sont fixés sur la plaque extensible (8), afin d'élargir facultativement la table de machine (3) soit d'un côté soit de l'autre côté, et que les deux rails de guidage (6a, 6b ; 206a, 6b ; 306a, 6b), destinés à recevoir et à en sortir les bras extensibles (7a, 7b) associés, sont réalisés, tout en étant fixés sur ladite table, avec ladite plaque extensible (8) positionnée facultativement du côté de la table de machine (3) situé dans ladite direction de sortie (A) ou du côté de la table de machine (3) situé dans la direction opposée,
lesdits bras extensibles (7a, 7b) étant disposés à symétrie axiale, étant dimensionnés de façon identique et réalisés en tant que profilés à section constante, et ledit module de butée parallèle (9) étant guidé en translation sur ou bien dans les bras extensibles (7a, 7b).

2. Machine à travailler le bois (1) selon la revendication 1, **caractérisée par le fait que** lesdits bras extensibles (7a, 7b) présentent chacun une rainure contre-dépouillée de translation de butée parallèle (14a) et que ledit module de butée parallèle (9) est reçu dans lesdites rainures de translation de butée parallèle (14a).

3. Machine à travailler le bois (1) selon la revendication 1 ou 2, **caractérisée par le fait que** la section intérieure des rails de guidage (6a, 6b ; 206a, 6b ; 306a, 6b) est ouverte et contre-dépouillée sur leur grand côté qui, en état fixé, montre dans la direction opposée à la table.

4. Machine à travailler le bois (1) selon la revendication 1, 2 ou 3, **caractérisée par le fait que** sur l'un au moins des bras extensibles (7a, 7b), à son extrémité montrant dans la direction opposée à la table, est fixé un capuchon d'extrémité (13a, 13b) qui présente un diamètre supérieur à celui du bras extensible (7a, 7b), ou est prévu une projection dépassant le diamètre du bras extensible.

5. Machine à travailler le bois (1) selon l'une quelconque des revendications précédentes, **caractérisée par le fait que** l'on prévoit deux rails de guidage (6a, 6b ; 206a, 6b ; 306a, 6b) à dimensions identiques qui sont aptes à être fixés à symétrie axiale et de manière à s'étendre parallèlement sur les côtés de la table de machine (3) ou de la machine-outil (1), s'étendant dans la direction de sortie (A), et qui présentent une section intérieure constante sur leur longueur, laquelle forme, au moins principalement, la rainure de guidage respective.

6. Machine à travailler le bois (1) selon l'une quelconque des revendications précédentes, **caractérisée par le fait que** lesdits rails de guidage (6a, 6b ; 206a, 6b ; 306a, 6b) et lesdits bras extensibles (7a, 7b) sont réalisés chacun à partir d'un composant profilé de préférence extrudé, par exemple en métal, que l'une au moins des, de préférence les deux rainures de guidage présentent, au moins par sections, un revêtement, par exemple en matière plastique, et/ou que l'un au moins des, de préférence les deux segments de glissement présentent, au moins par sections, une enveloppe, par exemple en matière plastique, ledit revêtement et/ou ladite enveloppe étant réalisé(e)s, au moins sur sa face de glissement, dans une matière présentant une bonne capacité de glissement par rapport à la matière des composants profilés.

7. Machine à travailler le bois (1) selon la revendication 6, **caractérisée par le fait que** chaque enveloppe de matière plastique est réalisée respectivement sous forme d'un capuchon de glissement (11a, 11 b ; 111 ; 211) qui est posé sur l'extrémité du bras extensible respectif (7a, 7b) reçue dans la rainure de guidage associée et sur lequel ledit bras extensible (7a, 7b) glisse dans la rainure de guidage, de préférence dans le profilé de métal du rail de guidage (6a, 6b ; 206a, 6b ; 306a, 6b).

8. Machine à travailler le bois (1) selon la revendication 6 ou 7, **caractérisée par le fait que** chaque revêtement est réalisé sous forme d'au moins une douille de glissement (12a, 12b) posée sur au moins l'une des deux extrémités du rail de guidage (6a, 6b ; 206a, 6b ; 306a, 6b) associé, le bras extensible (7a, 7b) associé glissant de préférence avec son profilé de métal sur ladite douille de glissement (12a, 12b) qui est située du côté de ladite plaque extensible (8).

9. Machine à travailler le bois (1) selon la revendication 8, **caractérisée par le fait qu'**un dispositif de fixation amovible de respectivement une douille de glissement (12a, 12b) est prévu aux deux extrémités opposées de rail de guidage, de sorte que ladite douille de glissement (12a, 12b) - selon que la plaque extensible (8) doit être positionnée du côté de la table de machine (3) situé dans la direction de sortie (A) ou du côté de la table de machine (3) situé dans la direction opposée - puisse être posée sur l'extrémité de rail de guidage qui est située dans la direction de sortie (A) ou sur l'extrémité de rail de guidage située dans la direction opposée.

10. Machine à travailler le bois (1) selon la revendication 8, **caractérisée par le fait qu'**une douille de glissement est prévue aux deux extrémités opposées de rail de guidage.

11. Machine à travailler le bois (1) selon l'une quelconque des revendications précédentes, **caractérisée par le fait que** la section intérieure des rails de guidage (6a, 6b ; 206a, 6b ; 306a, 6b) et la section extérieure des bras extensibles (7a, 7b) sont pour l'essentiel rondes.

12. Machine à travailler le bois (1) selon l'une quelconque des revendications précédentes, **caractérisée par le fait que** l'on prévoit un dispositif d'arrêt (10) apte à être fixé sur la table et par l'intermédiaire duquel le nombre de bras extensibles (7a, 7b) peut être arrêté et libéré dans le nombre de rails de guidage (6a, 6b ; 206a, 6b ; 306a, 6b) avec une distance souhaitée entre ladite plaque extensible (8) et ladite table de machine (3), ledit dispositif d'arrêt (10) se prêtant à arrêter les bras extensibles (7a, 7b) aussi bien lorsque la plaque extensible (8) est positionnée du côté de la table de machine (3) situé dans la direction de sortie (A) que lorsque la plaque extensible (8) est positionnée du côté de la table de machine (3) situé dans la direction opposée, en particulier lorsque la plaque extensible (8) est positionnée du côté de la table de machine (3) situé dans la direction opposée et est espacée de la table de machine (3), sans qu'il faille procéder à un démontage et remontage.

13. Machine à travailler le bois (1) selon la revendication 12, **caractérisée par le fait que** ledit dispositif d'arrêt (10) présente un nombre de blocs de blocage (10f, 10g) aptes à être fixés sur la table et à être déplacés dans cette position transversalement à la direction de sortie (A) entre une position d'arrêt et une position de libération, l'un au moins du nombre de bras extensibles (7a, 7b) présentant au moins une surface d'appui qui s'étend parallèlement à la direction de sortie (A) et contre laquelle est plaqué le nombre de blocs de blocage (10f, 10g) dans la position d'arrêt, le bras extensible (7a, 7b) étant guidé de manière à ce que le bras extensible (7a, 7b) soit tenu contre le bloc de blocage (10f, 10g) plaqué.

14. Machine à travailler le bois (1) selon la revendication 13, **caractérisée par le fait que** les deux bras extensibles (7a, 7b) comprennent chacun une rainure de blocage (17a, 17b), lesdites rainures de blocage (17a, 17b) présentant, sur les faces des bras extensibles qui montrent l'une vers l'autre, une ouverture contre-dépouillée et, sur la face arrière de la contre-dépouille, des surfaces d'appui montrant dans la direction opposée l'une à l'autre, et que pour chacun des bras extensibles (7a, 7b) est prévu au moins un bloc de blocage (10f, 10g) qui peut être actionné par un arbre de serrage (10d, 10e) fixé sur le bloc de blocage (10f, 10g) et traversant la contre-dépouille.
